(19) Europäisches Patentamt / European Patent Office / Office européen des brevets

(11) **EP 4 006 698 B1**

(12) **FASCICULE DE BREVET EUROPEEN**

(45) Date de publication et mention
de la délivrance du brevet:
**27.03.2024   Bulletin 2024/13**

(21) Numéro de dépôt: **21210367.5**

(22) Date de dépôt: **25.11.2021**

(51) Classification Internationale des Brevets (IPC):
**G06F 3/01** *(2006.01)*        **B06B 1/02** *(2006.01)*
**B06B 1/06** *(2006.01)*        **G10K 11/34** *(2006.01)*
**G10K 15/02** *(2006.01)*

(52) Classification Coopérative des Brevets (CPC):
**G06F 3/016; B06B 1/0629; B06B 1/0688;
G10K 11/34; G10K 15/02**

(54) **INTERFACE HAPTIQUE**

HAPTISCHE SCHNITTSTELLE

HAPTIC INTERFACE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité:  **26.11.2020   FR 2012213**

(43) Date de publication de la demande:
**01.06.2022   Bulletin 2022/22**

(73) Titulaire: **Commissariat à l'Energie Atomique et
aux Energies
Alternatives
75015 Paris (FR)**

(72) Inventeurs:
• **CASSET, Fabrice
38054 GRENOBLE CEDEX (FR)**
• **RASCLE, Angélique
38054 GRENOBLE CEDEX (FR)**

(74) Mandataire: **Cabinet Nony
11 rue Saint-Georges
75009 Paris (FR)**

(56) Documents cités:
**EP-A1- 3 733 310        SE-A1- 1 950 931
US-A1- 2013 293 065      US-A1- 2018 181 203
US-A1- 2019 364 362**

• **YONGQIANG QIU ET AL: "Piezoelectric
Micromachined Ultrasound Transducer (PMUT)
Arrays for Integrated Sensing, Actuation and
Imaging", SENSORS, vol. 15, no. 4, 3 avril 2015
(2015-04-03), pages 8020-8041, XP055309471,
DOI: 10.3390/s150408020**

## Description

### Domaine technique

La présente invention concerne les interfaces homme-machine, et plus particulièrement celles utilisant des effets haptiques.

### Technique antérieure

Une interface haptique permet à l'utilisateur d'interagir avec l'environnement par le sens du toucher. L'effet haptique est aujourd'hui de plus en plus utilisé dans de nombreuses applications, notamment pour des dispositifs de réalité virtuelle ou augmentée.

Il est connu d'utiliser une matrice de transducteurs ultrasonores excités à une fréquence supérieure à 20kHz, dit fréquence porteuse, pour générer une pluralité d'ondes ultrasonores lesquelles, non audibles, sont focalisées en jouant sur le déphasage des porteuses en une zone de l'espace prédéfinie, pour générer une pression acoustique. Cette dernière est perceptible au toucher grâce à une modulation basse fréquence de l'amplitude des porteuses.

Cette technologie générant un effet à distance permet par exemple une meilleure immersion dans les jeux vidéo, notamment via l'adjonction d'effets haptiques lors de l'utilisation de lunettes de réalité virtuelle (VR), réalité augmentée (AR) ou réalité mixte (MR). Elle peut également s'appliquer à la fonctionnalisation de tableaux de bord, notamment automobiles, en permettant au conducteur d'obtenir une information tactile tout en gardant son attention sur la route.

US 2018/0181203 A1 divulgue une interface haptique permettant de générer un effet haptique sur la main d'un utilisateur grâce à une matrice de transducteurs ultrasonores dont les fréquences porteuses sont identiques, mais dont les fréquences de modulation basse fréquence sont différentes, afin de solliciter des récepteurs tactiles différents sensibles à des fréquences d'excitation différentes et créer ainsi un effet haptique multipoint.

FR3092680A1 décrit un dispositif de réalité virtuelle comportant une monture destinée à être portée sur la tête d'un utilisateur et comportant une pluralité de transducteurs identiques de type piézoélectrique micro-usiné (PMUT) générant un effet haptique sur la main de l'utilisateur.

SE 1 950 931 A1 divulgue un dispositif pour générer un champ d'ondes acoustiques Dans un mode de réalisation, un transducteur ultrasonique micro-usiné (MUT) comprend plusieurs matrices de éléments MUT, chacun émettant un signal ultrasonique modulé comprenant une pluralité d'ondes ultrasonores vers un point focal commun, chacune onde comprenant une onde porteuse modulée par un signal de modulation. Dans un mode de réalisation, le dispositif est utilisé pour produire des sensations tactiles.

US 2019/0364362 A1 décrit un dispositif pour la manipulation d'une onde acoustique incidente pour générer une sortie acoustique, le dispositif comportant une pluralité de cellules unitaires agencées en un réseau.

EP 3 733 310 A1 décrit un dispositif acoustique qui comprend un réseau de transducteurs acoustiques piézoélectriques formés par un empilement structuré sur un substrat souple. Le dispositif peut être utilisé pour créer une sensation tactile à distance.

US 2013/0293065 A1 divulgue des réseaux de transducteurs ultrasonores micro-usinés piézoélectriques (pMUT) et des systèmes comprenant des réseaux de pMUT. Selon un mode de réalisation, des dimensions de membrane différant à l'intérieur d'une population d'éléments de transducteur fournissent une réponse en fréquence différant pour une réponse totale de largeur de bande large.

Les interfaces haptiques existantes utilisent des matrices de transducteurs identiques émettant à une même fréquence porteuse.

Il est relativement difficile de complexifier les effets haptiques obtenus avec de tels transducteurs.

### Exposé de l'invention

Il existe par conséquent un besoin pour perfectionner encore les interfaces haptiques de type « à distance » (en anglais / « mid-air »), notamment afin de disposer d'une interface permettant de générer plus facilement des effets haptiques variés et relativement complexes, si cela est souhaité.

### Résumé de l'invention

L'invention vise à répondre à ce besoin et elle y parvient, selon un premier de ses aspects, grâce à une interface haptique de type « mid-air », comportant :

- un circuit de commande,
- une pluralité de transducteurs ultrasonores reliés audit circuit, dont un premier ensemble de transducteurs émettant à une première fréquence porteuse ultrasonore et au moins un deuxième ensemble de transducteurs émettant à une seconde fréquence porteuse ultrasonore différente de la première, les transducteurs du premier ensemble ayant une taille différente et/ou étant formés d'un matériau différent des transducteurs du deuxième ensemble;

le circuit de commande étant configuré pour moduler les signaux envoyés aux transducteurs, afin de :

  o générer avec les ondes ultrasonores émises par au moins une partie des transducteurs du premier ensemble une pression acoustique détectable tactilement en au moins une première zone focale, et
  o générer avec les ondes ultrasonores émises par au moins une partie des transducteurs du deuxième ensemble une pression acoustique détectable tactilement en au moins une seconde zone focale.

Par « zone focale », parfois encore appelée « point focal », on désigne la zone où les ondes ultrasonores sont concentrées et génèrent une pression acoustique détectable. Cette zone focale peut être une région de l'espace plus ou moins étendue, selon le but poursuivi.

L'invention simplifie la création d'effets haptiques complexes puisque de par sa construction l'interface permet de générer des effets en des zones situées à des distances différentes et/ou d'étendue différentes, en raison des fréquences de porteuse différentes.

Le circuit de commande est de préférence configuré de façon à calculer des déphasages à introduire dans les porteuses des différentes ondes ultrasonores émises par les transducteurs actionnés, et à générer ces déphasages de façon à concentrer les ondes ultrasonores émises en des zones focales prédéfinies.

Le circuit de commande peut recevoir des données d'un équipement définissant le(s) effet(s) haptique(s) à générer, en fonction par exemple de la position de la main de la personne à laquelle cet effet est destiné, relativement aux transducteurs. Le circuit de commande peut être configuré de manière à déterminer quels transducteurs actionner et les signaux à envoyer avec ceux-ci selon le(s) effet(s) haptique(s) désiré(s).

De préférence, la première zone focale est différente de la seconde. Les zones focales peuvent être localisées à des endroits différents dans l'espace et/ou être de tailles différentes.

De préférence, les première et deuxième fréquences de porteuse sont séparées d'au moins 10kHz, mieux d'au moins 20kHz, encore mieux d'au moins 30kHz, ce qui permet d'obtenir des effets haptiques relativement éloignés l'un de l'autre ou d'étendues nettement différentes sans avoir à moduler la puissance des transducteurs.

Les transducteurs peuvent être agencés pour fonctionner à des porteuses différentes de plusieurs façons. Pour un transducteur donné, la fréquence de la porteuse peut correspondre à la fréquence de résonnance du transducteur. On peut jouer par exemple sur la taille des transducteurs ou sur les matériaux employés, ces deux paramètres ayant une action sur la fréquence de résonance. Par exemple, les transducteurs du premier ensemble et ceux du deuxième ensemble ont des membranes actives de tailles différentes, de préférence réalisées de manière identique, notamment avec le ou les mêmes matériaux. Cela simplifie la réalisation des transducteurs, en permettant si on le souhaite de réaliser simultanément, par exemple sur un même support, une pluralité de transducteurs dont certains avec une taille de membrane donnée et d'autres avec une taille différente. Les transducteurs ayant la membrane active la plus grande peuvent émettre à la fréquence de porteuse la plus basse.

Les transducteurs du premier ensemble et ceux du deuxième ensemble peuvent être modulés en amplitude à une basse fréquence identique, ou en variante à des fréquences différentes.

La basse fréquence de modulation des porteuses est de préférence comprise entre 10 Hz et 5kHz, mieux entre 50Hz et 500Hz.

Les transducteurs du premier ensemble peuvent être regroupés de diverses façons, notamment selon un ou plusieurs sous-ensembles, de même que ceux du deuxième ensemble, en fonction des effets que l'on cherche à générer.

De préférence, les transducteurs des premier et deuxième ensembles sont portés par un même support, ayant tous une de leurs extrémités située dans un même plan par exemple. Ce support peut être rigide ou flexible, et prendre par exemple des configurations variées, notamment concave ou convexe, en fonction des effets recherchés.

L'interface peut comporter au moins un troisième ensemble de transducteurs émettant à une fréquence de porteuse ultrasonore différente de celles des premier et deuxième ensembles.

L'interface n'est pas limitée à un nombre particulier d'ensembles et peut comporter plus de trois ensembles, chaque ensemble ayant de préférence une fréquence porteuse différente de celle de chacun des autres ensembles.

Dans un exemple, les ensembles de transducteurs sont disposés suivant une répartition généralement imbriquée par ordre de hauteur de fréquence de porteuse. Par exemple, les transducteurs sont disposés selon un agencement généralement concentrique par ordre de taille des membranes actives, l'ensemble présentant la plus petite membrane active, c'est-à-dire émettant à la fréquence la plus élevée, étant par exemple situé au centre. D'autres agencements sont possibles, par exemple une alternance d'ensembles de transducteurs de fréquences de porteuse différentes dans une ou deux directions, ou des ensembles de transducteurs situés à des niveaux différents, ou pointant dans des directions différentes.

De préférence, l'interface comprend un système de détection configuré pour détecter la position, relativement aux transducteurs, d'au moins une zone à stimuler tactilement, le circuit de commande étant agencé pour contrôler les transducteurs et notamment la position des première et deuxième zones focales en fonction de la position de la zone de l'utilisateur ainsi détectée. Le système de détection peut utiliser pour cette détection au moins une partie des transducteurs ultrasonores, en analysant le signal retour réfléchi sur l'utilisateur, à la manière d'un sonar. Le système de détection peut aussi utiliser tout autre système, par exemple optique ou capacitif, adapté à cette détection.

Le système de détection peut être utilisé, le cas échéant, pour permettre à l'interface de passer d'un état de veille à un état actif, ou inversement.

Chaque transducteur peut être de tout type, piézoélectrique, ferroélectrique, électromagnétique, thermique, ces matériaux pouvant être déposés en couches minces ou mis en forme à partir de matériaux piézoélectriques céramiques. De préférence, le transducteur est de type piézoélectrique micro-usiné (PMUT), ce type de transducteur convenant à la réalisation simultanée d'un grand nombre de transducteurs.

Les transducteurs émettent par exemple dans une gamme de fréquence porteuse 20 kHz-150 kHz, et plus généralement toute gamme de fréquence supérieure à la gamme audible.

L'invention a encore pour objet un procédé pour générer au moins une perception tactile « mid air » sur un utilisateur en utilisant une interface selon l'invention, telle que définie plus haut, ce procédé comportant l'étape consistant à :

- Moduler grâce à un circuit de commande les signaux de commande envoyés aux transducteurs afin de :

   o générer avec les ondes ultrasonores émises par au moins une partie des transducteurs du premier ensemble une pression acoustique détectable tactilement en au moins une première zone focale, et
   o générer avec les ondes ultrasonores émises par au moins une partie des transducteurs du deuxième ensemble une pression acoustique détectable tactilement en au moins une seconde zone focale.

Le procédé peut comporter l'étape consistant à détecter la présence de l'utilisateur grâce à un système de détection et identifier l'emplacement où la perception tactile doit être générée. Selon l'effet recherché, les pressions acoustiques détectables tactilement peuvent être générées simultanément à la première zone focale et à la seconde zone focale. Elles peuvent aussi être générées successivement à la première zone focale et à la seconde zone focale.

Dans un exemple, une perception tactile d'une première surface est générée à la première zone focale et une perception tactile d'une deuxième surface est générée à la deuxième zone focale, de telle sorte que la perception de la deuxième surface donne l'impression à l'utilisateur qu'elle est plus petite que la première surface.

Dans d'autres modes de réalisation, une perception tactile d'une première surface est générée à la première zone focale et une perception tactile d'une deuxième surface est générée à la deuxième zone focale, de telle sorte que la perception de la deuxième surface donne l'impression à l'utilisateur qu'elle se situe plus loin que la première surface.

Les transducteurs du premier ensemble peuvent émettre à une fréquence porteuse plus basse que celle émise par les transducteurs du deuxième ensemble, une perception tactile d'une première surface est générée à la première zone focale et une perception tactile d'une deuxième surface est générée à la deuxième zone focale, de telle sorte que la perception de la première surface donne l'impression à l'utilisateur qu'elle se situe plus loin et/ou qu'elle est plus grande que la deuxième surface.

Ainsi, les transducteurs émettant à la fréquence porteuse la plus basse peuvent être utilisés pour générer l'effet haptique le plus lointain et/ou la perception tactile d'un motif avec le moins de résolution, c'est-à-dire le plus gros, et les transducteurs émettant à la fréquence porteuse la plus haute peuvent être utilisés pour générer l'effet haptique le plus proche et/ou la perception d'un motif plus petit.

L'invention a encore pour objet un procédé de fabrication de matrices de transducteurs de type PMUT, utilisées dans une interface selon l'invention telle que définie plus haut, comportant les étapes consistant à :

- Déposer au moins une première couche d'un matériau pour former les membranes des transducteurs sur la face supérieure d'un support, de préférence rigide, le support étant par exemple à base de silicium,
- déposer au moins un empilement piézoélectrique sur ladite au moins une première couche de formation des membranes, basé notamment sur la succession de dépôt et gravure de matériaux d'électrode et de matériau piézoélectrique,
- former une pluralité de transducteurs sur le support par masquage et gravure des couches précédemment déposées,
- découper le support par masquage et gravure afin d'exposer la face inférieure de la membrane de chaque transducteur, et
- connecter électriquement chaque transducteur au circuit de commande, notamment grâce à des connecteurs flexibles ou des connecteurs traversant le support.

De préférence, au moins les premier et deuxième ensembles de transducteurs sont ainsi réalisés sur le même support.

L'invention pourra être mieux comprise à la lecture de la description détaillée qui va suivre, d'exemples de mise en oeuvre non limitatifs de celle-ci, et à l'examen du dessin annexé, sur lequel :

**Brève description des dessins**

   [Fig 1] la figure 1 représente de manière partielle et schématique un exemple d'interface haptique de type « mid air » selon l'invention,
   [Fig 2] la figure 2 illustre de manière schématique le principe de focalisation des ondes ultrasonores en jouant sur le déphasage,
   [Fig 3] la figure 3 est une vue de dessus, partielle et schématique, d'un exemple de transducteur ultrasonore,

[Fig 4] la figure 4 représente de manière partielle et schématique un exemple de réalisation d'une matrice de transducteurs comportant des transducteurs de tailles différentes,

[Fig 5a] la figure 5a représente de manière partielle et schématique un exemple de réalisation d'un ensemble de matrices de transducteurs,

[Fig 5b] la figure 5b représente de manière partielle et schématique un autre exemple de réalisation d'un ensemble de matrices de transducteurs,

[Fig 5c] la figure 5c représente de manière partielle et schématique un autre exemple de réalisation d'un ensemble de matrices de transducteurs,

[Fig 6a] la figure 6a illustre de manière partielle et schématique une matrice de transducteurs de tailles différentes pouvant générer des sensations tactiles variées,

[Fig 6b] la figure 6b illustre de manière partielle et schématique la possibilité de générer des sensations tactiles variées à partir d'une matrice de transducteurs de tailles différentes,

[Fig 6c] la figure 6c illustre de manière partielle et schématique la possibilité de générer d'autres sensations tactiles variées à partir d'une matrice de transducteurs de tailles différentes,

[Fig 7] la figure 7 est une coupe partielle et schématique d'un exemple de réalisation d'un transducteur ultrasonore de type PMUT,

[Fig 8] la figure 8 est un schéma en blocs illustrant des étapes d'un exemple de procédé de fabrication d'une pluralité de transducteurs ultrasonores de type PMUT,

[Fig 9] la figure 9 est une coupe partielle et schématique illustrant la deuxième étape de la figure 8,

[Fig 10] la figure 10 est une coupe partielle et schématique de la pluralité de transducteurs de type PMUT après la troisième étape de la figure 8,

[Fig 11] la figure 11 est une coupe partielle et schématique de la pluralité de transducteurs de type PMUT de la figure 8 avant le découpage par matrice,

[Fig 12] la figure 12 est une coupe partielle et schématique illustrant un exemple de connexion électrique du transducteur de la figure 7, et

[Fig 13] la figure 13 est un schéma en blocs illustrant un exemple de fonctionnement de l'interface haptique selon l'invention.

## Description détaillée

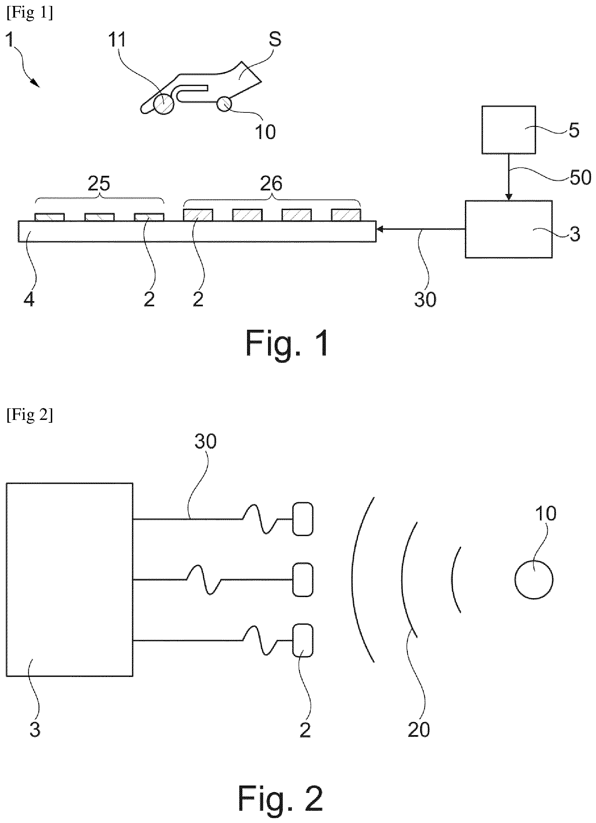

On a illustré schématiquement à la figure 1 un exemple d'interface haptique 1 selon l'invention.

L'interface 1 comprend une pluralité de transducteurs ultrasonores 2, par exemple portés par un même support 4, et un circuit de commande 3.

La pluralité de transducteurs 2 comporte un premier ensemble 25 de transducteurs émettant à une première fréquence porteuse ultrasonore et un deuxième ensemble 26 de transducteurs émettant à une seconde fréquence porteuse ultrasonore, différente de la première.

Le circuit de commande 3 est configuré pour moduler les signaux 30 envoyés aux transducteurs 2 afin de générer avec les ondes ultrasonores émises par le premier ensemble de transducteurs une pression acoustique détectable tactilement sur une surface S, définie par exemple par la paume et/ou les doigts d'une main, en une première zone focale 10, et avec les ondes ultrasonores émises par le second ensemble de transducteurs une pression acoustique détectable tactilement par la surface S en une seconde zone focale 11. Chaque zone focale présente des caractéristiques spatiales dépendant notamment de la fréquence de porteuse de l'ensemble de transducteurs à l'origine de la pression acoustique correspondante.

Les zones focales 10 et 11 peuvent être localisées à des endroits distincts de la surface S ou se recouper au moins partiellement. Elles peuvent être de tailles différentes ou non.

Dans l'exemple considéré, l'interface 1 comporte en outre un système de détection 5 configuré pour détecter la position de la surface S à stimuler tactilement et transmettre des données de localisation correspondantes 50 au circuit de commande 3. L'interface 1 est dite de type « mid-air » car la surface S à stimuler tactilement se situe à distance des transducteurs 2, et les zones focales 10 et 11 se situent dans l'air à distance des transducteurs, étant visuellement invisibles par l'utilisateur.

Les pressions acoustiques détectables tactilement sont générées suivant un principe dit de « focalisation électronique acoustique », connu de l'art antérieur et illustré de manière schématique à la figure 2.

Pour concentrer les ondes ultrasonores 20 émises par les transducteurs 2 d'un même ensemble de transducteurs en une zone focale 10 prédéfinie, le circuit de commande 3 envoie de façon connue en soi aux transducteurs 2 des signaux alternatifs complexes 30 afin d'introduire des déphasages entre les différentes ondes ultrasonores émises par les transducteurs 2 actionnés, générant ainsi la forme de front d'onde voulue, cette forme de front d'onde résultant en une augmentation de la pression acoustique dans la zone focale 10.

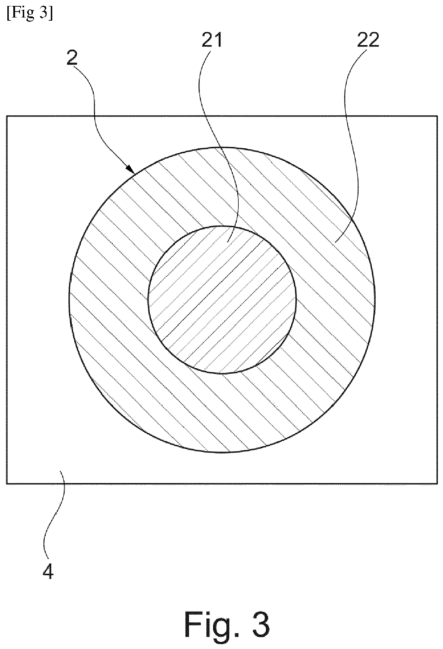

On a représenté à la figure 3 un exemple de transducteur 2 porté par un support 4. Le transducteur 2 comporte par exemple un actionneur piézolélectrique 21 et une membrane active 22 mise en vibration par l'actionneur 21.

Dans l'exemple considéré, la membrane active 22 est de forme circulaire. Dans d'autres modes de réalisation, la membrane active 22 est de forme non circulaire, par exemple polygonale, notamment carrée, rectangle, ou tout autre forme appropriée, 2D ou 3D, la membrane pouvant être de forme convexe ou concave. Le rayon de l'actionneur piézoélectrique 21 est par exemple de l'ordre de 50% du rayon de la membrane active 21, ce ratio étant avantageux pour une bonne déformation de la membrane, comme décrit dans l'article de Casset, F., et al. "Piezoelectric membrane actuator design." (2011 12th Intl. Conf. on Thermal, Mechanical & Multi-Physics Simulation and Experiments in Microelectronics and Microsystems. IEEE, 2011).

Au sein de chaque ensemble de transducteurs, ces derniers sont identiques et émettent par conséquent à la même fréquence de porteuse. D'un ensemble à l'autre, les transducteurs 2 diffèrent par exemple dans leur dimension, chaque dimension correspondant à une fréquence de porteuse respective. La membrane active 22 des transducteurs 2 varie par exemple en épaisseur et/ou en rayon, de préférence en rayon, d'un ensemble à l'autre.

Les transducteurs des différents ensembles de l'interface selon l'invention peuvent être disposés au sein d'une ou plusieurs matrices 40. Par « matrice », on désigne une structure d'un seul tenant portant plusieurs transducteurs, identiques ou non. Une matrice peut comporter des transducteurs qui ont été réalisés simultanément, comme détaillé plus loin.

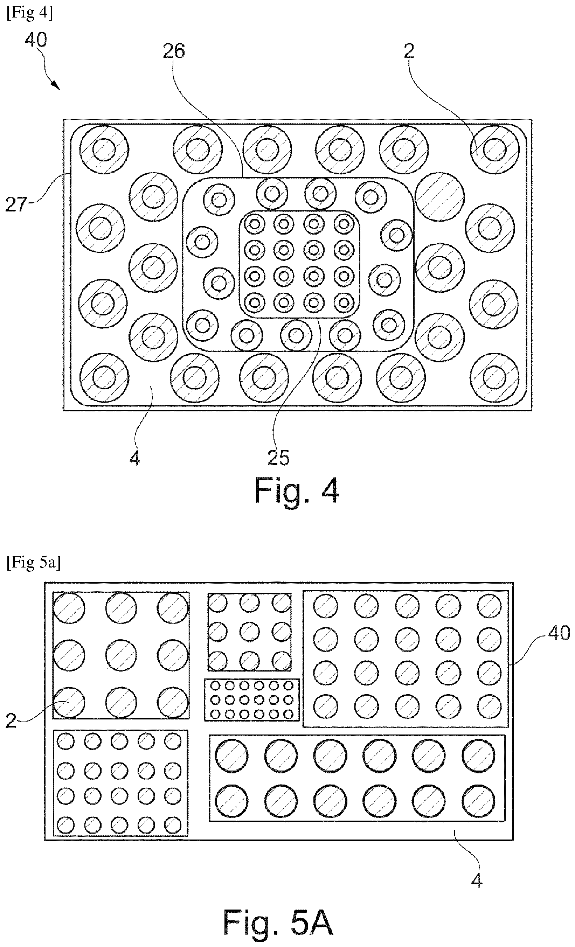

On a représenté à la figure 4 une matrice 40 de transducteurs ultrasonores 2 comportant trois ensembles 25, 26 et 27 de transducteurs de tailles respectives différentes, les transducteurs 2 étant disposés sur le support 4 en suivant par exemple une répartition concentrique, comme illustré. Par exemple, l'ensemble 25 correspond à celui comportant les transducteurs 2 de plus petite taille, disposés au centre de la matrice, l'ensemble 26 à celui comportant les transducteurs 2 de taille intermédiaire, et l'ensemble 27 à celui comportant les transducteurs 2 de plus grande taille, répartis sur la périphérie de la matrice.

Les membranes actives 22 des transducteurs 2 des ensembles 25, 26 et 27 présentent par exemple des rayons de 1000, 1600 et 2200 micromètres, respectivement. La fréquence de porteuse f correspondant à une taille de membrane donnée peut être estimée grâce à l'équation suivante, issue de l'article de Nguyen, M. D., et al. "Optimized electrode coverage of membrane actuators based on epitaxial PZT thin films."(Smart materials and structures 22.8 (2013): 085013.):

$$f = \frac{\lambda_n^2 t}{2\pi r^2}\sqrt{\frac{E}{12\rho(1-v)}}$$

avec E et $v$ le module de Young et le coefficient de Poisson de la membrane, respectivement, $\rho$ sa masse volumique moyenne, $t$ son épaisseur et $r$ son rayon. $\lambda_n$ est la valeur propre de résonance de la membrane avec n le mode de résonance.

Dans l'exemple considéré, la fréquence de porteuse des transducteurs 2 des ensembles 25, 26 et 27 est ainsi approximativement de 107 kHz, 44kHz et 22kHz, respectivement. Suivant ces fréquences, l'effet haptique peut être généré à une distance de l'ordre de 10 cm à 1m.

Les transducteurs de différents ensembles peuvent être disposés au sein d'une même matrice 40 de diverses façons, par exemple de manière généralement concentrique comme illustré à la figure 4, ou bien mélangés aléatoirement ou en respectant d'autres règles de disposition des transducteurs les uns relativement aux autres.

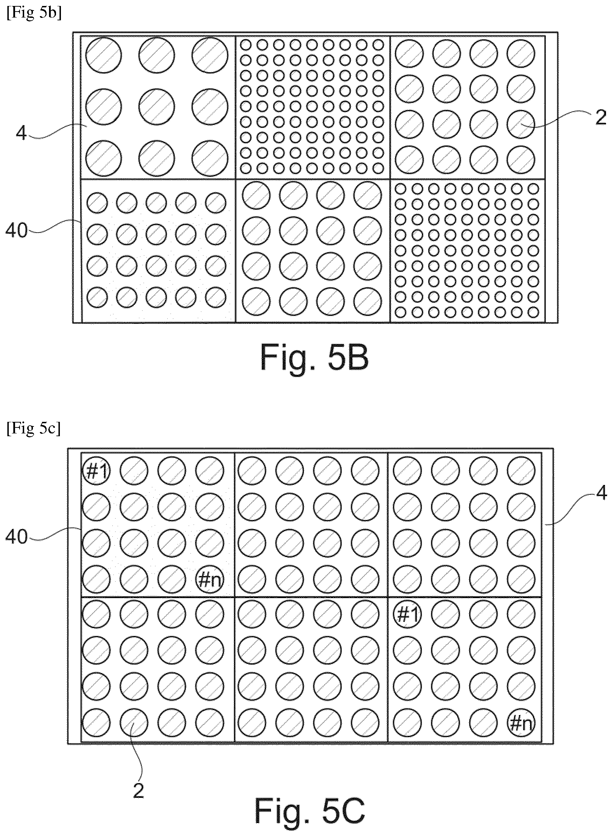

Dans d'autres modes de réalisation, comme illustré par exemple aux figures 5a, 5b et 5c, les ensembles sont disposés sur des matrices respectives distinctes 40 qui sont par exemple regroupées, les matrices 40 étant par exemple assemblées selon un même plan. Les matrices 40 peuvent être de tailles et formes différentes, tel que sur la figure 5a, ou de taille semblable telle que sur la figure 5b. Les membranes 22 des transducteurs 2 de chaque matrice 40 peuvent différer en épaisseur, tel qu'illustré sur la figure 5c, la fréquence de porteuse variant avec l'épaisseur.

Le dimensionnement de la ou des matrices 40 de transducteurs 2 dépend du ou des effet(s) haptique(s) désiré(s).

Il est possible d'estimer le nombre de transducteurs nécessaires à partir de la pression acoustique que l'on souhaite générer et de sa localisation. Par exemple, pour des transducteurs présentant un rayon de membrane active de l'ordre de 1000 micromètres, un effet haptique perceptible au doigt, correspondant à une pression acoustique de 198 Pa, peut être obtenu à une distance de 0.2m avec environ 550 transducteurs. Cette pression acoustique est la somme des pressions acoustiques unitaires générées par chaque transducteur. La pression acoustique unitaire $P$ générée par un transducteur peut être calculée à partir de la surface $S_m$ de sa membrane, de sa fréquence porteuse $f$ et de la distance $d$ à laquelle elle est générée, en utilisant l'équation de la pression acoustique issue d'un piston plan suivante :

$$P = \frac{\sqrt{2}.\pi.\rho.S_m.\epsilon.f^2}{d}$$

Avec $\rho$ la masse volumique moyenne de la membrane et $\varepsilon$ l'amplitude de la vibration.

Similairement au calcul précédent, il est possible de générer à la même distance de 0.2m un effet haptique perceptible au doigt, correspondant à une pression acoustique de 199 Pa, avec 700 transducteurs présentant un rayon de membrane de l'ordre de 1600 micromètres. Environ 900 transducteurs de rayon de membrane de 2200 micromètres peuvent être utilisés pour générer une pression acoustique du même ordre à une distance similaire.

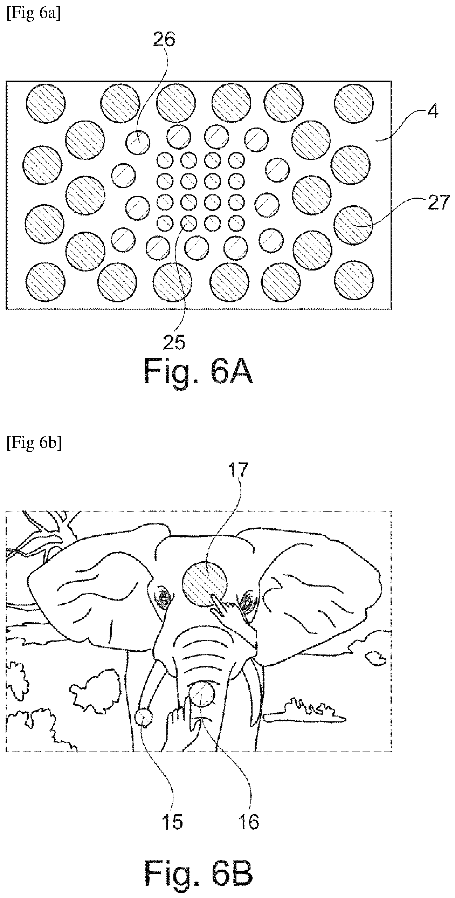

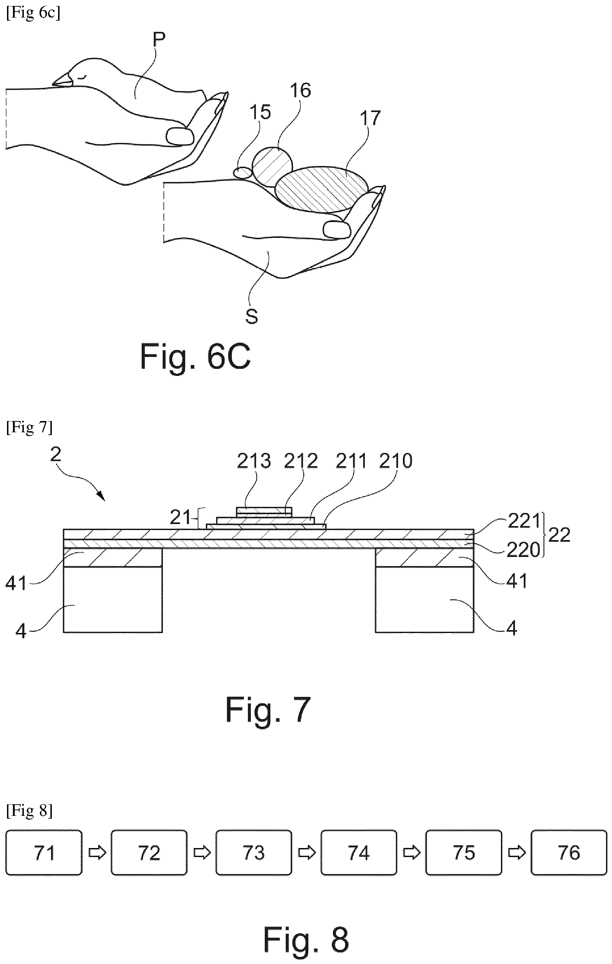

Il est possible d'obtenir simplement des effets haptiques qui seraient relativement complexes à obtenir autrement en utilisant les contributions acoustiques des transducteurs opérant aux différentes fréquences de porteuse. Ce principe est illustré sur les figures 6a, 6b et 6c.

On utilise par exemple comme illustré à la figure 6a une matrice 40 comportant trois ensembles 25, 26 et 27 de transducteurs disposés selon une répartition concentrique par ordre de taille, des plus petits transducteurs (ensemble 25) au centre aux plus grands transducteurs (ensemble 27) à la périphérie. L'utilisation des transducteurs de taille et donc de fréquence de porteuse variée permet de générer simultanément ou successivement des effets haptiques plus ou moins localisés, ou de complexifier un effet haptique en un point de l'espace. Par exemple, les transducteurs 2 de plus grande taille, c'est-à-dire émettant à la fréquence porteuse la plus basse (correspondant à l'ensemble 27 dans l'exemple considéré) peuvent être utilisés pour générer l'effet haptique le plus lointain et/ou la perception tactile d'un motif avec le moins de résolution, c'est-à-dire le plus gros. A l'inverse, les transducteurs 2 de plus petite taille, c'est-à-dire émettant à la fréquence porteuse la plus haute (correspondant à l'ensemble 25) peuvent être utilisés pour générer l'effet haptique le plus proche et/ou la perception d'un motif plus petit.

Dans l'exemple illustré à la figure 6b, les transducteurs de l'ensemble 27 génèrent par exemple une perception tactile 17 donnant l'impression à l'utilisateur de toucher le front d'un éléphant, tandis que les transducteurs de l'ensemble 25 génèrent une perception tactile 15 donnant l'impression à l'utilisateur de toucher une zone plus petite et plus anguleuse du même éléphant, par exemple la pointe de sa défense. Les transducteurs de l'ensemble 26, de taille intermédiaire, peuvent générer une perception tactile 16 donnant par exemple l'impression à l'utilisateur de toucher la trompe de l'éléphant.

Dans un autre exemple, illustré à la figure 6c, l'utilisateur peut avoir l'impression de tenir dans sa main un poussin P grâce à trois effets haptiques 15, 16 et 17 générés par les ensembles 25, 26 et 27, respectivement, et reproduisant virtuellement les perceptions tactiles du bec, de la tête et du corps du poussin, respectivement.

On a représenté à la figure 7 un exemple de réalisation d'un transducteur 2 de l'interface 1. Dans l'exemple considéré, le transducteur 2 est de type piézoélectrique micro-usiné (PMUT) et comprend, comme décrit précédemment, une membrane active 22 fixée sur un support rigide 4 et un actionneur piézoélectrique 21 disposé sur la membrane 22.

Le support rigide 4 est par exemple en silicium. Une couche isolante 41, par exemple en oxyde de silicium, peut être ajoutée entre le support 4 et la membrane 22. La membrane 22 est fixée sur le support uniquement par sa périphérie, sa partie centrale étant libre de se courber.

La membrane 22 est formée d'une ou plusieurs couches constitutives superposées et présente une épaisseur totale par exemple comprise entre 0.5 et 10 μm. Dans l'exemple considéré, la membrane 22 est composée de deux couches superposées 220 et 221. La couche inférieure 220 est par exemple en poly silicium et d'épaisseur 4 μm. La couche supérieure 221 est par exemple en oxyde de silicium et d'épaisseur 1,9 μm.

L'actionneur piézoélectrique 21 comprend par exemple quatre couches superposées 210, 211, 212 et 213. La couche 210 est en contact avec la couche supérieure 221 de la membrane 22. La couche 210 est par exemple en platine et constitue l'électrode inférieure de l'actionneur 21. L'électrode supérieure de l'actionneur comprend dans cet exemple une couche 212, par exemple en ruthénium, et une couche conductrice 213, par exemple en or. La couche 211 qui se situe entre les deux électrodes est en matériau piézoélectrique ou ferroélectrique, par exemple de type titano-zirconate de plomb (PZT). Elle peut aussi être en nitrure d'aluminium (AlN), en oxyde de zinc (ZnO) ou tout autre matériau piézoélectrique ou ferroélectrique approprié.

Pour obtenir le transducteur PMUT illustré à la figure 7, on peut mettre en oeuvre un procédé de fabrication comprenant les étapes représentées à la figure 8, et permettant de réaliser simultanément un grand nombre de transducteurs.

A l'étape 71, on dépose une ou plusieurs couche(s), par exemple en poly silicium et oxyde de silicium, sur la face supérieure d'un substrat rigide 4, afin de former les membranes actives 22 des transducteurs. Une couche isolante 41 peut être déposée entre le substrat 4 et la première couche de la membrane au préalable.

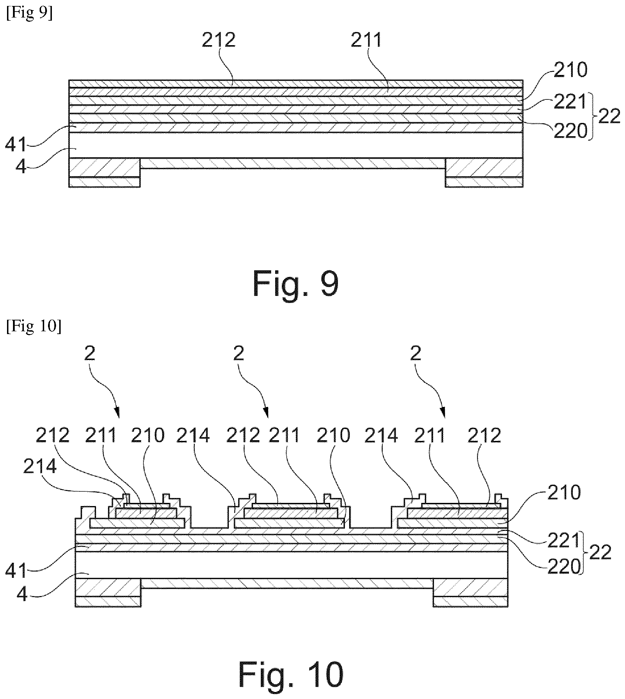

A l'étape 72, on dépose successivement en couche mince les matériaux qui formeront les actionneurs piézoélectriques 21. On commence par exemple par déposer une couche de platine 210 pour former l'électrode inférieure, puis on la recouvre avec une couche 211 d'un matériau piézoélectrique de type PZT, qui est par la suite elle-même recouverte par une couche mince de ruthénium 212. A la fin de l'étape 72 et comme illustré à la figure 9, on obtient un empilement continu des couches précédemment décrites, à savoir de bas en haut : le support 4, la couche isolante 41, les couches 220 et 221 formant la membrane 22, et les couches 210, 211 et 212 formant l'actionneur piézoélectrique 21.

On forme alors à l'étape 73, et comme illustré à la figure 10, la pluralité de transducteurs sur le support 4 par application d'un masque et par gravure des couches 210, 211 et 212 constituant l'actionneur piézo-électrique. Cette étape peut en outre comprendre l'application d'une couche isolante de passivation 214, par exemple en oxyde de silicium, et d'une couche conductrice 213, par exemple en or, sur au moins une partie de la couche 212.

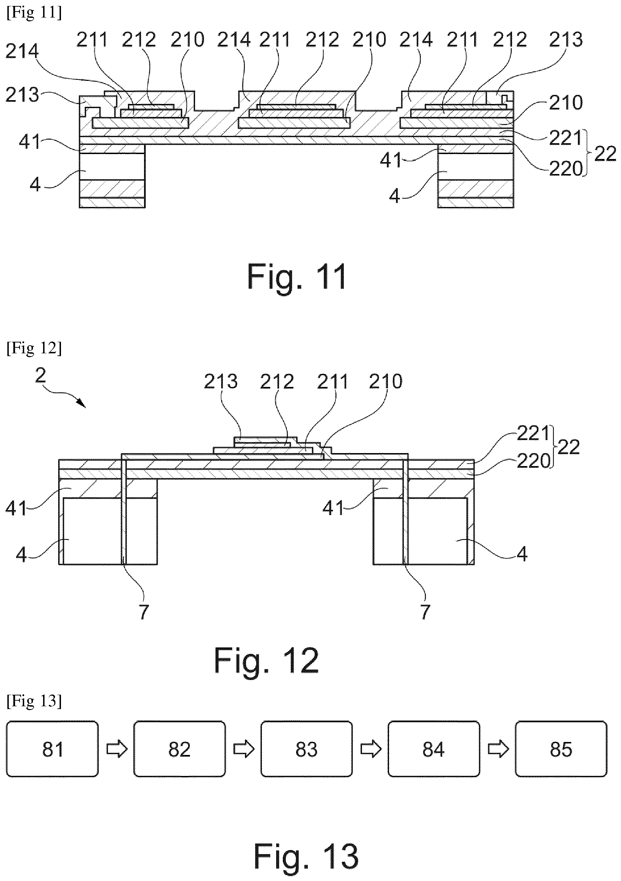

A l'étape 74, la face inférieure du support 4 et la couche isolante 41 sont découpées, par exemple via l'application d'un masque puis par gravure, de façon à exposer la face inférieure de la partie centrale de la membrane active 22 de chaque transducteur tel qu'illustré à la figure 11.

On peut ainsi réaliser simultanément sur un même support une pluralité de transducteurs de manière simple. A l'étape 75, le support peut ensuite être découpé afin d'obtenir des matrices 40 de transducteurs de taille souhaitée. On peut jouer sur la taille et l'épaisseur des membranes pour obtenir des transducteurs de fréquences différentes.

A l'étape 76, chaque transducteur est connecté électriquement à une électronique de pilotage grâce, par exemple, à des connexions traversantes 7.

Pour connecter électriquement les transducteurs ainsi obtenus à leur électronique de pilotage, des connecteurs flexibles peuvent être reliés à chacun des transducteurs.

Les matrices 40 ainsi obtenues peuvent ensuite être intégrées à un boîtier et les connecteurs flexibles reliés à l'électronique de pilotage. Alternativement et comme illustré à la figure 12, des connexions traversantes 7 peuvent être utilisées pour amener des contacts électriques sur la face inférieure du support 4. Les matrices 40 de transducteurs peuvent alors être directement intégrées sur l'électronique de pilotage.

Lorsqu'une différence de tension est appliquée entre les électrodes 210 et 213, la couche piézoélectrique 211 peut se déformer sous l'action du champ électrique généré, induisant une déformation de la membrane active 22 et l'émission d'une onde acoustique. A l'inverse, le transducteur 2 ainsi connecté peut agir en récepteur d'onde acoustique, par exemple en tant que système de détection de la surface S sur laquelle l'effet haptique doit être généré. Dans ce cas, la réception d'une onde acoustique déforme le couche 211 et donc la membrane 22, entrainant une variation du champ électrique qui peut être traduite par un signal électrique sur les électrodes, mesuré grâce aux connexions électriques 7.

Une interface haptique 1 selon l'invention, couplée avec un système de détection 5, peut fonctionner selon les étapes décrites à la figure 13.

A l'étape 81, l'interface haptique est par exemple en veille, en l'absence d'un utilisateur dans le champ de détection du système de détection 5. A l'étape 82, le système de détection 5, par exemple réalisé avec une partie des transducteurs 2 ou avec n'importe quel autre système de détection adapté, par exemple optique, détecte la présence d'une surface S d'un utilisateur dans le champ de détection et localise l'endroit où doit être généré(s) le ou les effet(s) haptique(s). A l'étape 83, le circuit de commande 2 envoie les signaux de commande appropriés 30 pour actionner au moins une partie transducteurs 2 de façon à générer les effets haptiques désirés. A l'étape 84, les transducteurs émettent des ondes ultrasonores à des fréquences porteuses différentes, selon les ensembles actionnés, permettant de générer un ou plusieurs effets haptiques en une ou plusieurs zones focales, donnant par exemple l'impression à l'utilisateur de toucher des surfaces plus ou moins grosses, en mouvement et/ou présentant du relief. A l'étape 85, l'utilisateur se retire du champ de détection et l'interface 1 se remet en veille.

Bien entendu, l'invention n'est pas limitée aux exemples qui viennent d'être décrits.

Par exemple, les transducteurs ultrasonores peuvent être de tout autre type que PMUT, et émettre dans toute gamme de fréquence porteuse supérieure à la gamme audible.

Les transducteurs peuvent être réalisés autrement que par le procédé de fabrication décrit ci-dessus. Les membranes actives sont par exemple réalisées sur un support en verre ou sur une feuille souple d'un polymère. L'actionneur piézoélectrique peut se trouver au centre de la membrane ou non, sous forme de disque ou d'anneau ou tout autre forme, et être de taille diverse par rapport à la taille de la membrane. Il peut y avoir plusieurs actionneurs piézoélectriques sur une même membrane, par exemple un en son centre et un sur la périphérie. Les transducteurs peuvent être déposés en couche mince ou transférés directement sur la membrane. Comme décrit précédemment, les transducteurs de taille de membrane différente peuvent être disposés sur le support selon toute répartition.

Les ondes ultrasonores dans les exemples considérés se propagent dans l'air, mais tout type de milieu peut être considéré, par exemple un liquide.

Les effets haptiques peuvent être générés à différents points repérés par rapport à une zone de peau prédéfinie d'un utilisateur, et/ou en un ou plusieurs points fixes dans l'espace, indépendamment de la détection d'un utilisateur, par exemple pour donner à toute personne franchissant la zone l'impression de la présence d'un obstacle. Ils peuvent être générés sur les deux mains d'un utilisateur, simultanément ou non, ou sur toute autre partie du corps de l'utilisateur.

Les effets haptiques peuvent être générés de manière à donner l'impression à un utilisateur de toucher différentes textures.

L'interface haptique peut être reliée à un ou plusieurs système(s) générant un effet visuel, par exemple au moins un écran, miroir ou hologramme.

**Revendications**

1. Interface haptique de type « à distance », comportant :

    - un circuit de commande (3),
    - une pluralité de transducteurs ultrasonores (2) reliés audit circuit, dont un premier ensemble (25) de transducteurs émettant à une première fréquence porteuse ultrasonore et au moins un deuxième ensemble (26) de transducteurs émettant à une seconde fréquence porteuse ultrasonore différente de la première, les transducteurs du premier ensemble ayant une taille différente et/ou étant formés d'un matériau différent des transducteurs du deuxième ensemble ;

le circuit de commande étant configuré pour moduler les signaux (30) envoyés aux transducteurs (2) afin de :

> o générer avec les ondes ultrasonores émises par au moins une partie des transducteurs du premier ensemble une pression acoustique détectable tactilement en au moins une première zone focale (10), et
> o générer avec les ondes ultrasonores émises par au moins une partie des transducteurs du deuxième ensemble une pression acoustique détectable tactilement en au moins une seconde zone focale (11).

**2.** Interface selon la revendication 1, les première et deuxième fréquences de porteuse étant séparées d'au moins 10kHz, mieux d'au moins 20kHz, encore mieux d'au moins 30kHz.

**3.** Interface selon l'une des revendications précédentes, les transducteurs du premier ensemble et ceux du deuxième ensemble ayant des membranes actives (22) de tailles différentes, de préférence réalisées de manière identique.

**4.** Interface selon l'une quelconque des revendications précédentes, les transducteurs du premier ensemble étant regroupés selon un ou plusieurs sous-ensembles, de même que ceux du deuxième ensemble.

**5.** Interface selon l'une des revendications précédentes, les transducteurs du premier et ceux du deuxième ensemble étant portés par un même support (4).

**6.** Interface selon l'une des revendications précédentes, comportant au moins un troisième ensemble (27) de transducteurs (2) émettant à une fréquence de porteuse ultrasonore différente de celles des premier et deuxième ensembles.

**7.** Interface selon l'une des revendications précédentes, les ensembles de transducteurs étant disposés selon un agencement généralement concentrique par ordre de hauteur de fréquence de porteuse, l'ensemble émettant à la fréquence porteuse la plus élevée étant disposé au centre.

**8.** Interface selon l'une quelconque des revendications précédentes, comprenant un système de détection (5) configuré pour détecter la position relativement aux transducteurs d'au moins une surface (S) à stimuler tactilement, le circuit de commande (3) étant agencé pour contrôler les transducteurs et notamment la position des première et deuxième zones focales en fonction de la position de la surface de l'utilisateur ainsi détectée.

**9.** Interface selon l'une quelconque des revendications précédentes, chaque transducteur (2) d'un ensemble étant de type piézoélectrique, ferroélectrique, électromagnétique, thermique ou piézoélectrique céramique, de préférence de type piézoélectrique, en particulier de type piézoélectrique micro-usiné, PMUT.

**10.** Procédé pour générer au moins une perception tactile à distance sur un utilisateur en utilisant une interface telle que définie dans l'une quelconque des revendications 1 à 9, comportant l'étape consistant à :

> - Moduler grâce à un circuit de commande les signaux de commande envoyés aux transducteurs afin de :
>
> > o générer avec les ondes ultrasonores émises par au moins une partie des transducteurs du premier ensemble une pression acoustique détectable tactilement en au moins une première zone focale, et
> > o générer avec les ondes ultrasonores émises par au moins une partie des transducteurs du deuxième ensemble une pression acoustique détectable tactilement en au moins une seconde zone focale.

**11.** Procédé selon la revendication 10, une perception tactile d'une première surface étant générée à la première zone focale et une perception tactile d'une deuxième surface étant générée à la deuxième zone focale, de telle sorte que la perception de la deuxième surface donne l'impression à l'utilisateur qu'elle est plus petite que la première surface.

**12.** Procédé selon l'une des revendications 10 et 11, une perception tactile d'une première surface étant générée à la première zone focale et une perception tactile d'une deuxième surface étant générée à la deuxième zone focale, de telle sorte que la perception de la deuxième surface donne l'impression à l'utilisateur qu'elle se situe plus loin que la première surface.

**13.** Procédé selon l'une des revendications 10 à 12, les transducteurs du premier ensemble émettant à une fréquence porteuse plus basse que celle émise par les transducteurs du deuxième ensemble, une perception tactile d'une première surface étant générée à la première zone focale et une perception tactile d'une deuxième surface étant générée à la deuxième zone focale, de telle sorte que la perception de la première surface donne l'impression à l'utilisateur qu'elle se situe plus loin et/ou qu'elle est plus grande que la deuxième surface.

**14.** Procédé de fabrication de matrices de transducteurs de type piézoélectrique micro-usiné, PMUT, d'une interface telle que définie dans l'une quelconque des revendications 1 à 9, le procédé comportant les étapes consistant à :

- déposer au moins une première couche d'un matériau pour former les membranes des transducteurs sur la face supérieure d'un support,
- déposer au moins un empilement piézoélectrique sur ladite au moins une première couche de formation des membranes, basé sur la succession de dépôt et gravure de matériaux d'électrode et de matériau piézoélectrique,
- former une pluralité de transducteurs sur le support par masquage et gravure des couches précédemment déposées,
- découper le support par masquage et gravure afin d'exposer la face inférieure de la membrane de chaque transducteur, et
- connecter électriquement chaque transducteur au circuit de commande, notamment grâce à des connecteurs flexibles ou des connecteurs traversant le support.

**15.** Procédé selon la revendication précédente, dans lequel au moins les premier et deuxième ensembles de transducteurs sont réalisés de cette manière sur le même support.


**Patentansprüche**

**1.** Haptische Schnittstelle vom Typ "Mid-Air", umfassend:

- eine Steuerschaltung (3),
- eine Mehrzahl von Ultraschallwandlern (2), die mit der Schaltung verbunden sind, darunter eine erste Gruppe (25) von Wandlern, die mit einer ersten Ultraschallträgerfrequenz emittieren, und mindestens eine zweite Gruppe (26) von Wandlern, die mit einer zweiten Ultraschallträgerfrequenz emittieren, die von der ersten verschieden ist, wobei die Wandler der ersten Gruppe eine andere Größe haben und/oder aus einem anderen Material gebildet sind als die Wandler der zweiten Gruppe;

wobei die Steuerschaltung dazu ausgestaltet ist, die an die Wandler (2) gesendeten Signale (30) zu modulieren, um:

• mit den Schallwellen, die von mindestens einem Teil der Wandler der ersten Gruppe emittiert werden, einen Schalldruck zu erzeugen, der in mindestens einem ersten Fokalbereich (10) taktil detektierbar ist, und

• mit den Schallwellen, die von mindestens einem Teil der Wandler der zweiten Gruppe emittiert werden, einen Schalldruck zu erzeugen, der in mindestens einem zweiten Fokalbereich (11) taktil detektierbar ist.

**2.** Schnittstelle nach Anspruch 1, wobei die ersten und zweiten Trägerfrequenzen um mindestens 10 kHz, besser um mindestens 20 kHz, noch besser um mindestens 30 kHz getrennt sind.

**3.** Schnittstelle nach einem der vorhergehenden Ansprüche, wobei die Wandler der ersten Gruppe und die der zweiten Gruppe aktive Membranen (22) unterschiedlicher Größen haben, die bevorzugt identisch ausgeführt sind.

**4.** Schnittstelle nach einem der vorhergehenden Ansprüche, wobei die Wandler der ersten Gruppe zu einer oder mehreren Untergruppen zusammengefasst sind, ebenso wie die der zweiten Gruppe.

**5.** Schnittstelle nach einem der vorhergehenden Ansprüche, wobei die Wandler der ersten und die der zweiten Gruppe von einem selben Träger (4) getragen werden.

**6.** Schnittstelle nach einem der vorhergehenden Ansprüche, umfassend mindestens eine dritte Gruppe (27) von Wandlern (2), die mit einer Ultraschallträgerfrequenz emittieren, die von denen der ersten und zweiten Gruppen verschieden ist.

**7.** Schnittstelle nach einem der vorhergehenden Ansprüche, wobei die Gruppen von Wandlern gemäß einer im Allgemeinen konzentrischen Anordnung in der Reihenfolge der Trägerfrequenzhöhe angeordnet sind, wobei die mit der höchsten Trägerfrequenz emittierende Gruppe im Zentrum angeordnet ist.

**8.** Schnittstelle nach einem der vorhergehenden Ansprüche, die ein Detektionssystem (5) aufweist, das dazu ausgestaltet ist, die Position relativ zu den Wandlern mindestens einer taktil zu stimulierenden Oberfläche (S) zu detektieren, wobei die Steuerschaltung (3) dazu ausgebildet ist, die Wandler und insbesondere die Position der ersten und zweiten Fokalbereiche in Abhängigkeit von der so detektierten Position der Oberfläche des Benutzers zu steuern.

**9.** Schnittstelle nach einem der vorhergehenden Ansprüche, wobei jeder Wandler (2) einer Gruppe vom piezoelektrischen, ferroelektrischen, elektromagnetischen, thermischen oder piezoelektrischen keramischen Typ ist, bevorzugt vom piezoelektrischen Typ, insbesondere vom piezoelektrischen mikrobearbeiteten Typ, PMUT.

**10.** Verfahren zum Erzeugen mindestens einer taktilen Mid-Air-Wahrnehmung bei einem Benutzer unter Verwendung einer wie in einem der Ansprüche 1 bis 9 definierten Schnittstelle, umfassend den folgenden Schritt:

- Modulieren der an die Wandler gesendeten Steuersignale dank einer Steuerschaltung, um:

• mit den Schallwellen, die von mindestens einem Teil der Wandler der ersten Gruppe emittiert werden, einen Schalldruck zu erzeugen, der in mindestens einem ersten Fokalbereich taktil detektierbar ist, und

• mit den Schallwellen, die von mindestens einem Teil der Wandler der zweiten Gruppe emittiert werden, einen Schalldruck zu erzeugen, der in mindestens einem zweiten Fokalbereich taktil detektierbar ist.

**11.** Verfahren nach Anspruch 10, wobei eine taktile Wahrnehmung einer ersten Oberfläche in dem ersten Fokalbereich erzeugt wird und wobei eine taktile Wahrnehmung einer zweiten Oberfläche in dem zweiten Fokalbereich erzeugt wird, so dass die Wahrnehmung der zweiten Oberfläche dem Benutzer den Eindruck vermittelt, dass sie kleiner als die erste Oberfläche ist.

**12.** Verfahren nach einem der Ansprüche 10 und 11, wobei eine taktile Wahrnehmung einer ersten Oberfläche in dem ersten Fokalbereich erzeugt wird und wobei eine taktile Wahrnehmung einer zweiten Oberfläche in dem zweiten Fokalbereich erzeugt wird, so dass die Wahrnehmung der zweiten Oberfläche dem Benutzer den Eindruck vermittelt, dass sie weiter entfernt als die erste Oberfläche ist.

**13.** Verfahren nach einem der Ansprüche 10 bis 12, wobei die Wandler der ersten Gruppe mit einer Trägerfrequenz emittieren, die niedriger als die von den Wandlern der zweiten Gruppe emittierte ist, wobei eine taktile Wahrnehmung einer ersten Oberfläche in dem ersten Fokalbereich erzeugt wird und wobei eine taktile Wahrnehmung einer zweiten Oberfläche in dem zweiten Fokalbereich erzeugt wird, so dass die Wahrnehmung der ersten Oberfläche dem Benutzer den Eindruck vermittelt, dass sie weiter entfernt und/oder dass sie größer als die zweite Oberfläche ist.

**14.** Verfahren zur Herstellung von Matrizen von Wandlern vom piezoelektrischen mikrobearbeiteten Typ, PMUT, einer wie in einem der Ansprüche 1 bis 9 definierten Schnittstelle, wobei das Verfahren die folgenden Schritte umfasst:

- Aufbringen mindestens einer ersten Schicht eines Materials, um die Membranen der Wandler auf der Oberseite eines Trägers zu bilden,

- Aufbringen mindestens eines piezoelektrischen Stapels auf die mindestens eine erste Schicht zur Bildung der Membranen, basierend auf der Abfolge von Aufbringen und Ätzen von Elektrodenmaterialien und von piezoelektrischem Material,

- Bilden einer Mehrzahl von Wandlern auf dem Träger durch Maskieren und Ätzen der zuvor aufgebrachten Schichten,

- Zerteilen des Trägers durch Maskieren und Ätzen, um die Unterseite der Membran jedes Wandlers freizulegen, und

- elektrisches Anschließen jedes Wandlers an die Steuerschaltung, insbesondere dank von flexiblen Verbindern oder von den Träger durchquerenden Verbindern.

**15.** Verfahren nach dem vorhergehenden Anspruch, bei dem mindestens die ersten und zweiten Gruppen von Wandlern auf diese Weise auf demselben Träger ausgeführt werden.

**Claims**

**1.** Mid-air haptic interface, comprising:

- a control circuit (3),
- a plurality of ultrasound transducers (2) which are connected to said circuit, including a first set (25) of transducers which emit at a first ultrasound carrier frequency and at least one second set (26) of transducers which emit at a second ultrasound carrier frequency which is different from the first, the transducers in the first set being of a different size and/or being formed from a different material from the transducers in the second set;

the control circuit being configured to modulate the signals (30) which are sent to the transducers (2) in order to:

• generate, with the ultrasound waves emitted by at least some of the transducers in the first set, an acoustic pressure which can be detected tactilely in at least one first focal region (10), and

• generate, with the ultrasound waves emitted by at least some of the transducers in the second set, an acoustic pressure which can be detected tactilely in at least one second focal region (11).

**2.** Interface according to Claim 1, the first carrier frequency and second carrier frequency being separated by at least 10 kHz, better still by at least 20 kHz, even better still by at least 30 kHz.

**3.** Interface according to one of the preceding claims, the transducers in the first set and those in the second set having active membranes (22) of different sizes, which are preferably produced in an identical manner.

**4.** Interface according to any one of the preceding claims, the transducers in the first set being grouped in one or more subsets, like those in the second set.

**5.** Interface according to one of the preceding claims, the transducers in the first set and those in the second set being carried by the same substrate (4).

**6.** Interface according to one of the preceding claims, comprising at least one third set (27) of transducers (2) which emit at an ultrasound carrier frequency which is different from those of the first set and second set.

**7.** Interface according to one of the preceding claims, the sets of transducers being arranged in an arrangement which is generally concentric in order of carrier frequency, the set which emits at the highest carrier frequency being arranged at the centre.

**8.** Interface according to any one of the preceding claims, comprising a detection system (5) configured to detect the position, relative to the transducers, of at least one surface (S) to be stimulated tactilely, the control circuit (3) being arranged to control the transducers and notably the position of the first focal region and second focal region as a function of the position of the surface of the user thus detected.

**9.** Interface according to any one of the preceding claims, each transducer (2) in a set being piezoelectric, ferroelectric, electromagnetic, thermal or ceramic piezoelectric, preferably piezoelectric, in particular piezoelectric micromachined (PMUT).

**10.** Method for generating at least one mid-air tactile perception on a user using an interface such as is defined in any one of Claims 1 to 9, comprising the step consisting in:

    - modulating, thanks to a control circuit, the control signals sent to the transducers in order to:

        • generate, with the ultrasound waves emitted by at least some of the transducers in the first set, an acoustic pressure which can be detected tactilely in at least one first focal region, and
        • generate, with the ultrasound waves emitted by at least some of the transducers in the second set, an acoustic pressure which can be detected tactilely in at least one second focal region.

**11.** Method according to Claim 10, a tactile perception of a first surface being generated in the first focal region and a tactile perception of a second surface being generated in the second focal region, so that the perception of the second surface gives the impression to the user that it is smaller than the first surface.

**12.** Method according to one of Claims 10 and 11, a tactile perception of a first surface being generated in the first focal region and a tactile perception of a second surface being generated in the second focal region, so that the perception of the second surface gives the impression to the user that it is located further away than the first surface.

**13.** Method according to one of Claims 10 to 12, the transducers in the first set emitting at a carrier frequency which is lower than that emitted by the transducers in the second set, a tactile perception of a first surface being generated in the first focal region and a tactile perception of a second surface being generated in the second focal region, so that the perception of the first surface gives the impression to the user that it is located further away and/or that it is bigger than the second surface.

**14.** Method for manufacturing arrays of piezoelectric micromachined transducers (PMUTs) of an interface such as is defined in any one of Claims 1 to 9, the method comprising the steps consisting in:

    - depositing at least one first layer of a material in order to form the membranes of the transducers on the upper side of a substrate,
    - depositing at least one piezoelectric stack on said at least one first membrane formation layer, based on the succession of depositing and etching electrode materials and piezoelectric material,
    - forming a plurality of transducers on the substrate by masking and etching the previously deposited layers,
    - cutting the substrate by masking and etching in order to expose the lower side of the membrane of each transducer, and
    - electrically connecting each transducer to the control circuit, notably thanks to flexible connectors or connectors passing through the substrate.

**15.** Method according to the preceding claim, wherein at least the first set and second set of transducers are produced in this manner on the same substrate.

P 4 006 698 B1

[Fig 1]

Fig. 1

[Fig 2]

Fig. 2

13

[Fig 3]

Fig. 3

[Fig 4]

40

26

2

27

4

25

## Fig. 4

[Fig 5a]

40

2

4

## Fig. 5A

[Fig 5b]

Fig. 5B

[Fig 5c]

Fig. 5C

[Fig 6a]

Fig. 6A

[Fig 6b]

Fig. 6B

[Fig 6c]

Fig. 6C

[Fig 7]

Fig. 7

[Fig 8]

Fig. 8

[Fig 9]

Fig. 9

[Fig 10]

Fig. 10

[Fig 11]

Fig. 11

[Fig 12]

Fig. 12

[Fig 13]

Fig. 13

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20180181203 A1
- FR 3092680 A1
- SE 1950931 A1
- US 20190364362 A1
- EP 3733310 A1
- US 20130293065 A1

**Littérature non-brevet citée dans la description**

- Piezoelectric membrane actuator design. **CASSET, F. et al.** 2011 12th Intl. Conf. on Thermal, Mechanical & Multi-Physics Simulation and Experiments in Microelectronics and Microsystems. IEEE, 2011
- **NGUYEN, M. D. et al.** Optimized electrode coverage of membrane actuators based on epitaxial PZT thin films. *Smart materials and structures,* 2013, vol. 22 (8), 085013